# EUROPÄISCHE PATENTSCHRIFT

(11) **EP 3 739 906 B1**
(45) Veröffentlichungstag und Bekanntmachung des Hinweises auf die Patenterteilung: **14.08.2024**
(21) Anmeldenummer: 20159933.9
(22) Anmeldetag: 27.02.2020
(51) Int. Cl.: H04R 25/00, B60T 13/14, B60T 13/68, B60T 13/74, H01M 10/42, H01M 10/46, H01M 50/213, H01M 50/247, H01M 10/0525

(54) **HÖRINSTRUMENT**
HEARING INSTRUMENT
INSTRUMENT AUDITIF

(30) Priorität: 14.05.2019 DE 102019207008
(43) Veröffentlichungstag der Anmeldung: 18.11.2020
(73) Patentinhaber: Sivantos Pte. Ltd., Singapore 539775 (SG)
(72) Erfinder: HUSUNG, Kunibert, 91052 Erlangen (DE); RITTER, Hartmut, 91077 Neunkirchen (DE)
(74) Vertreter: FDST Patentanwälte

(56) Entgegenhaltungen:
- US-A1- 2011 097 609
- US-A1- 2013 162 197
- US-A1- 2016 365 751
- HOSSEIN MALEKI ET AL: "Lithium Ion Cell/Batteries Electromagnetic Field Reduction in Phones for Hearing Aid Compliance", BATTERIES, vol. 2, no. 2, 15 June 2016 (2016-06-15), pages 19, XP055691051, DOI: 10.3390/batteries2020019
- "Lithium-Ion Batteries - Fundamentals and Applications", 24 April 2015, CRC PRESS, TAYLOR & FRANCIS GROUP, Boca Raton, FL, USA, ISBN: 978-1-4665-5734-5, article CHANGHE CAO ET AL: "section 14.1.8 Winding or Stacking Process", pages: 486 - 487, XP055691148
- "Lithium-Ion Batteries", 8 January 2009, SPRINGER NEW YORK, New York, NY, ISBN: 978-0-387-34445-4, article KAZUO TAGAWA ET AL: "section 8.7 Li-Ion Flat Plate and Polymer Cell Fabrication", pages: 190 - 192, XP055691153, DOI: 10.1007/978-0-387-34445-4

## Beschreibung

Die Erfindung betrifft ein Hörinstrument nach dem Oberbegriff des Anspruchs 1, mit einer aufladbaren Batterie und einer (magnetisch) induktiven Sende- und/oder Empfangsspule.

Als "Hörinstrument" werden allgemein Geräte bezeichnet, die einen Umgebungsschall aufnehmen, signaltechnisch modifizieren und ein modifiziertes Schallsignal an das Gehör einer das Hörinstrument tragenden Person ("Träger") abgeben. Ein Hörinstrument, das zur Versorgung eines hörgeschädigten Trägers ausgebildet ist und das akustische Umgebungssignale derart verarbeitet, insbesondere verstärkt, dass die Hörschädigung ganz oder teilweise kompensiert wird, wird hier und im Folgenden als "Hörgerät" bezeichnet. Ein Hörgerät umfasst hierzu üblicherweise einen Eingangswandler, beispielsweise in Form eines Mikrofons, eine Signalverarbeitungseinheit mit einem Verstärker, sowie einen Ausgangswandler. Der Ausgangswandler ist in der Regel als Miniaturlautsprecher realisiert und wird auch als "Hörer" (Receiver) bezeichnet.

Zusätzlich zu Hörgeräten gibt es allerdings auch Hörinstrumente, die auf die Versorgung von Normalhörenden ausgerichtet sind, um das Gehör des jeweiligen Trägers zu schützen oder um die Geräuschwahrnehmung (z.B. das Sprachverständnis in komplexen Geräuschumgebungen) für bestimmte Zwecke zu unterstützen. Solche Hörinstrumente sind oft ähnlich aufgebaut wie Hörgeräte und umfassen insbesondere auch die oben genannten Komponenten Eingangswandler, Signalverarbeitung und Ausgangswandler.

Um den zahlreichen individuellen Bedürfnissen entgegenzukommen, werden unterschiedliche Bauformen von Hörinstrumenten angeboten. Bei sogenannten BTE-Hörinstrumenten (Behind-The-Ear, auch Hinter-dem-Ohr, kurz HdO) wird ein mit dem Eingangswandler, der Signalverarbeitung und einer Batterie bestücktes Gehäuse hinter dem Ohr getragen. Je nach Ausgestaltung kann der Ausgangswandler direkt im Gehörgang des Trägers (sogenannte Ex-Hörer-Hörinstrumente oder Hörer-in-the-Canal-, kurz RIC-Hörinstrumente) angeordnet sein. Alternativ ist der Ausgangswandler innerhalb des Gehäuses selbst angeordnet. In diesem Fall leitet ein flexibler, auch als "Tube" bezeichneter Schallschlauch die akustischen Ausgabesignale des Ausgangswandlers vom Gehäuse zum Gehörgang (Schallschlauch-Hörinstrumente). Bei sogenannten ITE-Hörinstrumenten (In-the-Ear, auch In-dem-Ohr, kurz IdO) wird ein Gehäuse, welches sämtliche funktionale Komponenten einschließlich des Eingangswandlers und des Ausgangswandlers enthält, zumindest teilweise im Gehörgang getragen. Sogenannte CIC-Hörinstrumente (Completely-in-Canal) sind den ITE-Hörinstrumenten ähnlich, werden jedoch vollständig im Gehörgang getragen.

Aufgrund der zunehmenden Anzahl der integrierten Funktionen haben Hörinstrumente einen steigenden Energiebedarf, der mit den heute üblichen Einwegbatterien nicht in zufriedenstellender Weise gedeckt werden kann.

Es wird daher angestrebt, leistungsstarke aufladbare Batterien, insbesondere Lithium-lonen-Batterien (kurz: Li-lonen-Batterien), als Leistungsquelle für Hörinstrumente einzusetzen. Solche aufladbare Batterien erzeugen aber parasitäre Magnetfelder und können daher die in Hörinstrumenten, insbesondere Hörgeräten, häufig integrierten induktiven Sende- und/oder Empfangsspulen (z.B. Telefonspulen oder induktive Transceiver zur drahtlosen Kommunikation zwischen dem Hörinstrument und einem Peripheriegerät) stören. Die gleichzeitige und störungsfreie Anordnung einer aufladbaren Batterie und einer induktiven Sende- und/oder Empfangsspule in einem Hörinstrumentengehäuse ist daher kompliziert und in vielen Fällen sogar - angesichts des stark beengten Bauraums in dem Gehäuse eines Hörinstruments - unmöglich.

Ein Hörinstrument nach dem Oberbegriff des Anspruchs 1 ist aus US 2016/0365751 A1 bekannt.

US 2011/097609 A1 und US 2013/0162197 A1 offenbaren jeweils wiederaufladbare Batterien, insbesondere Lithium-Ionen-Batterien, die geschichtet sowie teilweise auch als Schichtstapel ausgebildet sind.

In H. Malecki, et al., "Lithium Ion Cell/Batteries Electromagnetic Field Reduction in Phones for Hearing Aid Compliance", Batteries 2016, Bd. 2, Nr. 2, S. 19 sind verschiedenen Bauarten von Lithium-Ionen-Batterien Im Zusammenhang mit Hörgeräten beschrieben.

Der Erfindung liegt die Aufgabe zugrunde, eine kompakte Anordnung sowohl einer leistungsstarken aufladbaren Batterie als auch einer induktiven Sende- und/oder Empfangsspule in einem Hörinstrument zu realisieren, wobei eine unerwünschte Beeinflussung der Sende- und/oder Empfangsspule durch die Batterie unterbunden oder zumindest weitgehend reduziert sein soll.

Diese Aufgabe wird erfindungsgemäß gelöst durch die Merkmale des Anspruchs 1. Vorteilhafte Ausführungsformen der Erfindung sind in den Unteransprüchen und der nachfolgenden Beschreibung dargelegt.

Das Hörinstrument weist einerseits eine aufladbare Batterie und andererseits eine induktive Sende- und/oder Empfangsspule (nachfolgend kurz: Spule) auf. Erfindungsgemäß ist die Batterie in der sogenannten Stack-Bauweise, d.h. als Schichtstapel ausgebildet. In Abgrenzung von gewickelten Batterien, bei denen ein oder mehrere Schichten der Batterie um eine innere Elektrode herumgewickelt sind, umfasst die in Stack-Bauweise ausgebildete Batterie eine Mehrzahl von Schichten, die in einer Schichtungsrichtung (oder Stapelrichtung) aufeinander gestapelt sind. Als Schichtungsebene (oder Stapelebene) wird eine Ebene bezeichnet, die orthogonal (d.h. unter einem rechten Winkel) zu der Schichtungsrichtung ausgerichtet ist. Diese Schichtungsebene ist parallel zu den Grenzflächen, an denen benachbarte Schichten der in Stack-Bauweise ausgebildeten Batterie aneinanderstoßen.

Die Spule ist dabei derart angeordnet, dass ihre Achse orthogonal zu der Schichtungsrichtung (d.h. parallel zu einer Schichtungsebene) der Batterie ausgerichtet ist. Hierdurch wird erreicht, dass die von der Batterie im Betrieb des Hörinstruments erzeugten parasitären Magnetfelder die Spule nicht oder nur in besonders geringem Maße stören. Dies wiederum ermöglicht eine besonders kompakte Anordnung der Batterie und der Spule ein einem Gehäuse des Hörinstruments. Insbesondere kann die Spule besonders nahe an der Batterie angeordnet werden, ohne dass die Funktion der Spule durch die Batterie gestört wird. Eine magnetische Abschirmung der Spule gegenüber der Batterie ist - je nach Bauform - entweder völlig unnötig und daher auch nicht vorhanden oder kann jedenfalls vergleichsweise einfach ausgebildet sein.

Die Batterie ist vorzugsweise in Form einer Li-Ionen-Batterie ausgebildet.

Bei der Spule handelt es sich insbesondere um eine Telefonspule (Telecoil) oder einen induktiven Transceiver. Telefonspulen sind auf den Empfang von magnetischen Wechselfeldern in dem typischen Frequenzbereich von hörbaren Schallwellen (z.B. ca. 100 Hz bis 10 kHz) ausgelegt und dienen zum Empfang von akustischer Information, die unmittelbar (beispielsweise durch in Kirchen oder Museen ausgelegte Induktionsschleifen) in magnetische Wechselfelder umgewandelt wurde. Induktive Transceiver sind auf das Senden und/oder Empfangen von magnetischen Wechselfeldern höherer Frequenzen, typischerweise in Mega-Hertz-Bereich, ausgelegt. Sie werden typischerweise zur drahtlosen Informationsübermittlung zwischen dem Hörinstrument und einem Peripheriegerät, z.B. einem weiteren Hörinstrument zur Versorgung des anderen Ohrs des Trägers, einer Fernbedienung, einem externen Audio-Schnittstellen-Gerät oder einem externen Mikrofon, eingesetzt. Die Spule kann ferner auch ein Bestandteil eines Magnetsensors, wie z.B. eines elektronischen Kompasses sein.

Vorzugsweise ist die Batterie in dem Gehäuse des Hörgeräts derart angeordnet, dass die Schichtungsrichtung der Batterie etwa in Blickrichtung des Trägers ausgerichtet ist, wenn dieser das Hörinstrument in der bestimmungsgemäßen Position in oder am Ohr trägt. Als Blickrichtung des Trägers wird hierbei - unabhängig von der Augenstellung des Trägers - die in der Symmetrieebene des Kopfes liegende, bei gerader Kopfhaltung horizontale Richtung bezeichnet, die somit insbesondere auch orthogonal zu der Kopfquerrichtung (also der geraden Verbindung zwischen den Ohren des Trägers) ausgerichtet ist. Diese Ausrichtung der Batterie ist besonders vorteilhaft, zumal sie eine günstige, aber gleichzeitig auch störungsgeschützte Anordnung der Spule erlaubt. So ist die Spule insbesondere derart angeordnet, dass ihre Achse in der bestimmungsgemäßen Trageposition des Hörinstruments in oder am Ohr sowohl orthogonal zu der Schichtungsrichtung also auch senkrecht im umgebenden Raum (also in einem rechten Winkel zu dem Erdboden) ausgerichtet ist. Die senkrechte Ausrichtung der Spulenachse ermöglicht insbesondere einen besonders guten Empfang, wenn die Spule als Telefonspule ausgebildet ist. In einer ebenfalls vorteilhaften Alternativausführung ist die Spule derart angeordnet, dass ihre Achse in der bestimmungsgemäßen Trageposition des Hörinstruments in oder am Ohr sowohl orthogonal zu der Schichtungsrichtung also auch parallel zu der Kopfquerrichtung ausgerichtet ist. Die Ausrichtung der Spulenachse in Querrichtung ermöglicht insbesondere eine besonders effiziente Signalübertragung, wenn die Spule als induktiver Transceiver ausgebildet ist und zum Signalaustausch mit einem an dem anderen Ohr des Trägers getragenen weiteren Hörinstrument genutzt wird.

Gemäß der üblichen Bauform weist die Batterie in zweckmäßiger Ausführung zwei elektrische Anschlusskontakte (Batteriepole) auf. Die aus den beiden Anschlusskontakten gebildete Baueinheit wird nachfolgend auch als "Kontaktanordnung" bezeichnet. In einer vorteilhaften Ausführungsform der Erfindung sind die beiden Anschlusskontakte in einem Abstand zueinander angeordnet, der klein gegen Längserstreckung der Batterie ist. Als Längserstreckung wird hierbei die Größe der längsten Kante oder Abmessung der Batterie verstanden. Insbesondere beträgt der Abstand der beiden Abschlusskontakte höchstens ein Drittel, vorzugsweise höchstens ein Viertel, der Längserstreckung der Batterie. In einer weiteren vorteilhaften Ausführungsform sind die beiden Anschlusskontakte parallel zu der Achse der Spule (d.h. entlang einer zu der Achse der Spule parallelen Linie) nebeneinander angeordnet.

Die Spule ist weiterhin bevorzugt - quer zu ihrer Achse gesehen - zentriert mit der Kontaktanordnung positioniert, nämlich insbesondere derart, dass ein geometrisches Zentrum der Spule äquidistant zu beiden Anschlusskontakten der Batterie angeordnet ist.

In zweckmäßiger Ausführung ist die Spule in der Nähe eines Bodens der Batterie, d.h. in der Nähe einer von den Abschlusskontakten abgewandten Seite der Batterie angeordnet, da hier die Stromdichte innerhalb der Batterie und insofern auch die Beeinflussung der Spule durch die Batterie besonders gering sind.

Erfindungsgemäß weist die Batterie allgemein die Form eines geraden mathematischen Zylinders mit polygonalen Stirnflächen und mindestens einer hierzu senkrechten Seitenwand auf. Die Stirnflächen sind dabei senkrecht zu der Schichtungsrichtung (parallel zu der Schichtungsebene) ausgerichtet. In einer für den Einsatz in der Hörvorrichtung besonders vorteilhaften Ausführungsform hat die Batterie dabei die Form eines Quaders (der insofern eine spezielle Form des vorstehend genannten geraden mathematischen Zylinders bildet). In dieser Bauform weist die Batterie zwei in Schichtungsrichtung der Batterie einander gegenüberliegenden Stirnseiten, zwei (zu den Stirnseiten senkrechte) einander gegenüberliegende Breitseiten und zwei (zu den Stirnseiten und den Breitseiten senkrechte) einander gegenüberliegende Schmalseiten auf. Die quaderförmige Ausführung der Batterie hat insbesondere den Vorteil, dass sich hierdurch vergleichsweise viele Batterie-Schichten in einem flachen Batteriegehäuse unterbringen lassen, das besonders gut (d.h. bauraumoptimiert) in dem Gehäuse des Hörinstruments integriert werden kann. Bei der vorstehend beschriebenen, zylinderförmigen (insbesondere quaderförmigen) Batterie sind die beiden Anschlusskontakte vorzugsweise an einer der beiden Stirnseiten angeordnet. Mit anderen Worten sind also beide Abschlusskontakte an derselben Stirnseite angeordnet.

Die Spule ist dabei benachbart zu der Seitenwand (oder einer von ggf. mehreren Seitenwänden) der Batterie angeordnet. In diesem Fall ist jeder der beiden Anschlusskontakte an dem von der Batterie abgewandten Rand einer zugeordneten Stirnseite angeordnet. Die (hier insbesondere wiederum auf der gleichen Stirnseite angeordneten) Anschlusskontakte sind somit besonders weit von der Spule entfernt, wodurch die Wahrscheinlichkeit einer Störung der Spule durch die Batterie weiter reduziert wird.

Bei einer quaderförmigen Batterie ist die Spule vorzugsweise benachbart zu einer Schmalseite der Batterie angeordnet, da dies zum einen aus Gründen der Bauraumoptimierung besonders günstig ist, und da zum anderen auf diese Weise die Spule in besonders großem Abstand zu den Anschlusskontakten der Batterie angeordnet werden kann. Diese Anordnung ist vor allem für vergleichsweise kleine Spulen, z.B. induktive Transceiver, besonders günstig.

Vor allem bei einer vergleichsweise großen Spule, insbesondere einer Telefonspule, wird dagegen aus Gründen der Bauraumoptimierung eine alternative Ausführungsform der Erfindung bevorzugt, bei der die Spule benachbart zu einer der beiden Breitseiten der quaderförmigen Batterie angeordnet ist. In diesem Fall ist die Spule bevorzugt - quer zu ihrer Achse gesehen - zentriert zu der Breitseite der Batterie positioniert.

Die vorstehend beschriebene Erfindung wird bevorzugt bei einem BTE-Hörinstrument eingesetzt. Die Batterie und die Spule sind in diesem Fall in einem hinter dem Ohr des Trägers zu tragenden Gehäuse angeordnet. Grundsätzlich kann die Erfindung aber auch bei anders gebauten Hörinstrumenten, insbesondere ITE-Hörinstrumenten oder (ganz oder teilweise) implantierten Hörinstrumenten, eingesetzt werden.

Bei dem Hörinstrument handelt es sich insbesondere um ein - wie eingangs beschrieben aufgebautes - Hörgerät zur Versorgung eines hörgeschädigten Trägers. Zusätzlich zu der Batterie, der Spule und dem Gehäuse weist das Hörinstrument vorzugsweise mindestens einen Eingangswandler (beispielsweise in Form eines Mikrofons), eine Signalverarbeitungseinheit mit einem (insbesondere digitalen) Signalprozessor und/oder einem Verstärker sowie einen Ausgangswandler (insbesondere einen Hörer), auf. Der Ausgangswandler ist dabei wahlweise in dem Gehäuse integriert oder in einem von dem Gehäuse getrennten Ohrstück angeordnet.

Nachfolgend werden Ausführungsbeispiele der Erfindung anhand einer Zeichnung näher erläutert. Darin zeigen:
- Fig. 1: in schematischer Darstellung ein Hörinstrument mit einem Gehäuse, einem Eingangswandler in Form eines Mikrofons, einer Signalverarbeitungseinheit, einem Ausgangswandler in Form eines Hörers sowie mit einer aufladbaren Batterie und einer induktiven (Sende- und/oder Empfangs-)Spule,
- Fig. 2: in perspektivischer Darstellung einen in dem Gehäuse angeordneten Elektronikrahmen des Hörinstruments gemäß Fig. 1 sowie die hier quaderförmige Batterie und die Spule in einer ersten Anordnung,
- Fig. 3: in Draufsicht auf eine zwei Anschlusskontakte tragende Stirnseite der Batterie die Anordnung der Batterie und der Spule gemäß Fig. 2,
- Fig. 4: in Darstellung gemäß Fig. 2 den Elektronikrahmen sowie die hier ebenfalls quaderförmige Batterie und die Spule des Hörinstruments gemäß Fig. 1 in einer zweiten Anordnung, und
- Fig. 5: in Darstellung gemäß Fig. 3 die Anordnung der Batterie und der Spule gemäß Fig. 4.

Einander entsprechende Teile und Größen sind stets mit gleichen Bezugszeichen versehen.

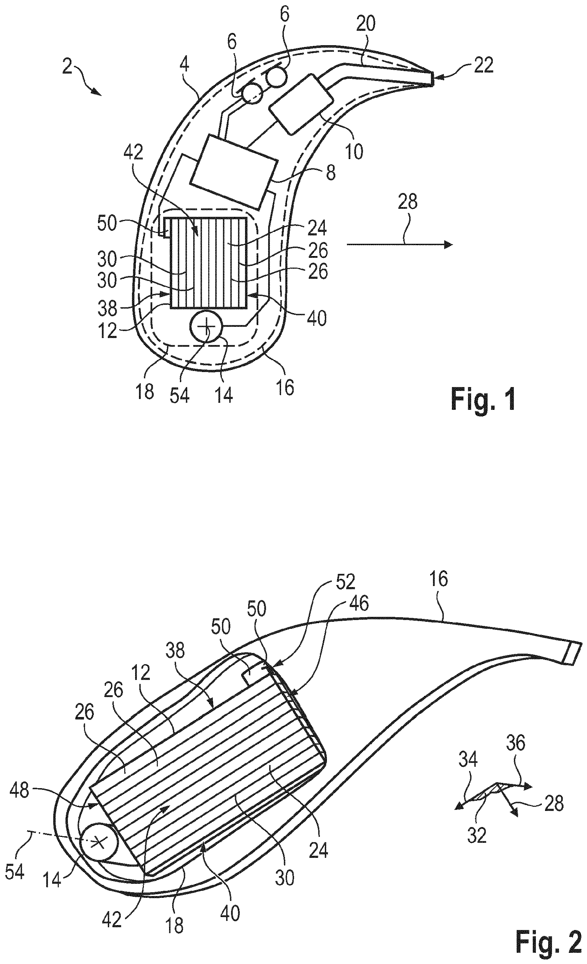

In Fig. 1 ist grob schematisch ein Hörinstrument 2 in Form eines (BTE-)Hörgeräts dargestellt.

Das Hörinstrument 2 umfasst ein hinter dem Ohr eines hörgeschädigten Trägers zu tragendes Gehäuse 4, in welchem als Hauptkomponenten zwei Eingangswandler 6 in Form von Mikrofonen, eine Signalverarbeitungseinheit 8 mit einem digitalen Signalprozessor und/oder einem Mikrocontroller, ein Ausgangswandler 10 in Form eines Hörers sowie eine aufladbare Batterie 12 angeordnet sind. Bei der Batterie 12 handelt es sich um eine Li-lonen-Batterie. Das Hörinstrument 2 umfasst weiterhin eine (magnetisch) induktive Spule 14 zum Senden und/oder Empfangen von magnetischen Wechselsignalen.

Ein Großteil der elektrischen und elektronischen Komponenten des Hörinstruments 2, insbesondere die Eingangswandler 6, die Signalverarbeitungseinheit 8 und der Ausgangswandler 8, sind an einem Elektronikrahmen 16 montiert. Bei dem Elektronikrahmen 16 handelt es sich um ein separat von dem Gehäuse 4 gefertigtes Gerüst, insbesondere aus Kunststoff, an dem die genannten elektrischen und elektronischen Komponenten außerhalb des Gehäuses 4 vormontiert werden können. Die Batterie 12 und/oder die Spule 14 sind vorzugsweise ebenfalls in oder an dem Elektronikrahmen 16 befestigt. Insbesondere sind die Batterie 12 und die Spule 14 in eine Aussparung 18 des Elektronikrahmens 16 derart eingelegt, dass die Batterie 12 und die Spule 14 in einer definierten Relativposition zueinander und zu dem Gehäuse 4 fixiert sind.

Im Betrieb der Hörvorrichtung 2 wird mittels der Eingangswandler 6 ein Schallsignal aus der Umgebung des Hörinstruments 2 aufgenommen und als Audiosignal (d.h. als eine Schallinformation tragendes elektrisches Signal) an die Signalverarbeitungseinheit 8 ausgegeben. Durch die Signalverarbeitungseinheit 8 wird das aufgenommene Audiosignal verarbeitet, insbesondere frequenzabhängig verstärkt, um die Hörschädigung des Trägers zu kompensieren. Die Signalverarbeitungseinheit 8 gibt ein aus dieser Verarbeitung resultierendes modifiziertes Audiosignal an den Ausgangswandler 10 aus. Dieser wandelt das modifizierte Audiosignal wiederum in ein Schallsignal um. Dieses (gegenüber dem aus der Umgebung aufgenommenen Schall modifizierte) Schallsignal wird von dem Ausgangswandler 10 zunächst durch einen Schallkanal 20 an eine Spitze 22 des Gehäuses 4, und von dort durch einen nicht explizit dargestellten Schallschlauch in das Ohr des Trägers geleitet.

In der Ausführungsform gemäß Fig. 1 ist die Spule 14 als induktiver Transceiver zum Datenaustausch mit einem zweiten Hörinstrument ausgebildet, wobei dieses zweite Hörinstrument an dem anderen Ohr des Trägers getragen wird. Die Spule 14 ist hierzu zum Senden und Empfangen von magnetischen Wechselsignalen im Mega-Hertz-Bereich (z.B. mit einer Frequenz von 3,3 MHz) ausgebildet.

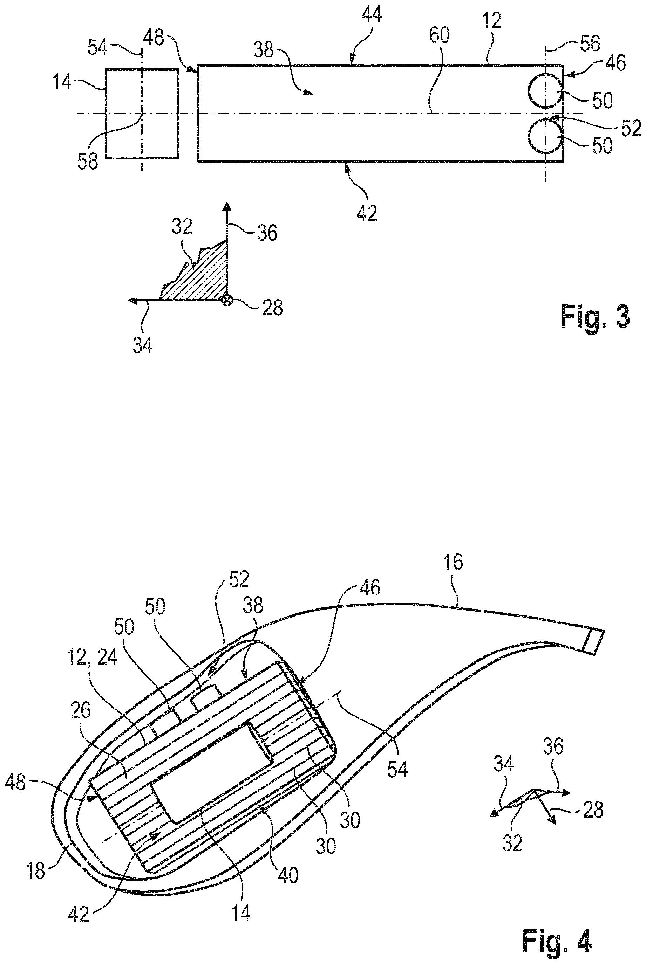

Die Batterie 12 ist in Stack-Bauweise, d.h. als Schichtstapel 24 aufgebaut. Sie umfasst demnach eine Mehrzahl von aktiven Schichten 26, die in einer Schichtungsrichtung 28 aufeinandergestapelt sind. Die Schichten 26 der Batterie 12 liegen dabei an Grenzflächen 30 aneinander, die parallel zu einer (z.B. in den Fig. 2 und 3 dargestellten) Schichtungsebene 32 ausgerichtet sind. Diese Schichtungsebene 32 steht orthogonal auf die Schichtungsrichtung 28 und wird in einem in den Fig. 2 und 3 dargestellten Koordinatensystem aufgespannt durch zwei zueinander und zu der Schichtungsrichtung 28 orthogonale Richtungen, nämlich eine Längsrichtung 34 und eine Querrichtung 36.

In dem in den Fig. 1 bis 3 dargestellten Ausführungsbeispiel hat die Batterie 12 die Form eines Quaders mit zwei Stirnseiten 38 und 40, die in Schichtungsrichtung 28 einander gegenüberliegen. Die beiden Stirnseiten 38 und 40 sind jeweils orthogonal zu der Schichtungsrichtung 28 (mithin parallel zu der Schichtungsebene 32) ausgerichtet und werden durch vier Seitenwände, nämlich zwei einander gegenüberliegende Breitseiten 42 und 44 (Fig. 3) sowie zwei einander gegenüberliegende Schmalseiten 46 und 48 verbunden.

Die Batterie 12 hat zwei elektrische Anschlusskontakte 50, die beide nebeneinander an der Stirnseite 38 angeordnet sind. Die durch die Anschlusskontakte 50 gebildet Baugruppe ist zusammenfassend auch als Kontaktanordnung 52 (Fig. 2) bezeichnet. Die Anschlusskontakte 50 sind hierbei an einem Rand der Stirnseite 38 angeordnet, der an die der Spitze 22 des Gehäuses 4 zugewandte Schmalseite 46 angrenzt.

Um eine unerwünschte Beeinflussung der Spule 14 durch die von der Batterie 12 im Betrieb des Hörinstruments 2 erzeugten parasitären Magnetfelder zu vermeiden oder zumindest möglichst gering zu halten, ist die Spule 14 benachbart zu der von der Spitze 22 des Gehäuses 4 abgewandten Schmalseite 48 der Batterie 12 angeordnet. Die Spule 14 ist somit vergleichsweise weit von den Anschlusskontakten 50 der Batterie 12 entfernt. Zudem ist die Spule 14 derart orientiert, dass ihre Achse 54 (Fig. 3) parallel zu der Querrichtung 36, und damit orthogonal zu der Schichtungsrichtung 28 (mithin parallel zu der Schichtungsebene 32) ausgerichtet ist.

Eine Beeinflussung der Spule 14 durch die Batterie 12 wird weiter dadurch reduziert, dass die beiden Anschlusskontakte 50 in einem Abstand zueinander angeordnet, der klein gegen Längserstreckung der Batterie 12 ist - in dem Beispiel gemäß Fig. 1 bis 3 entspricht der entlang einer Verbindungslinie 56 gemessene Abstand zwischen den Anschlusskontakten 50 nur etwa einem Siebtel der Längserstreckung der Batterie 12, die hier durch die Länge der in Längsrichtung 34 verlaufenden Kante der Batterie 12 gebildet ist. Des Weiteren sind die beiden Anschlusskontakte 50 parallel zu der Achse 54 der Spule 14 nebeneinander angeordnet. Mit anderen Worten ist die Verbindungslinie 56 zwischen den Anschlusskontakten 50 parallel zu der Achse 54 der Spule 14 ausgerichtet. Schließlich ist die Spule 14 - quer zu ihrer Achse 54 gesehen - zentriert mit der Kontaktanordnung 52 positioniert, also derart, dass das geometrische Zentrum 58 der Spule 14 in gleichem Abstand zu beiden Anschlusskontakten 50 der Batterie 12 angeordnet ist und dass eine zu der Verbindungslinie 56 orthogonale Symmetrieebene 60 der Kontaktanordnung 52 die Spule 14 in ihre geometrischen Zentrum 58 schneidet. Somit ist die Spule 14 derart angeordnet, dass sie zu den durch Kreisströme in der Batterie 12 verursachten parasitären Magnetfeldern orthogonal und zentriert angeordnet ist, wodurch Wechselwirkungen dieser Magnetfelder mit der Spule 14 ausgeschlossen oder zumindest weitgehend reduziert sind.

In der bestimmungsgemäßen Trageposition des Hörinstruments 2 an dem Ohr des Trägers ist die Batterie 12 derart ausgerichtet, dass ihre Schichtungsrichtung 28 exakt oder zumindest näherungsweise parallel zu der Blickrichtung des Trägers ausgerichtet ist. Die hierzu senkrechte Achse 54 der Spule 14 ist dabei exakt oder zumindest näherungsweise in Kopfquerrichtung, und somit auf das an dem anderen Ohr des Trägers getragene zweite Hörinstrument ausgerichtet. Somit wird eine effektive Datenübertragung zwischen den beiden Hörinstrumenten sichergestellt.

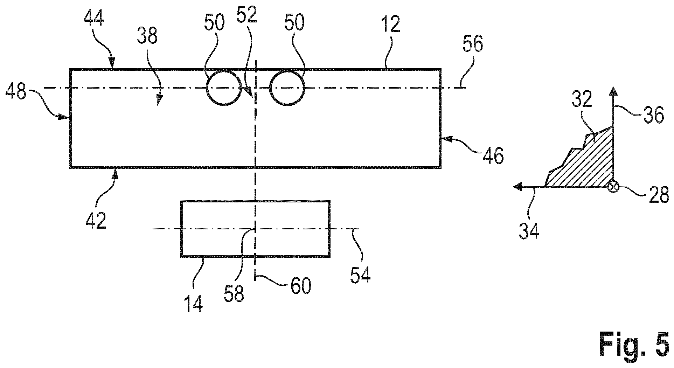

In den Fig. 4 und 5 ist eine zweite Ausführungsform des Hörinstruments 2 dargestellt, bei der die Spule 14 als Telefonspule ausgebildet ist. Aufgrund der hier wesentlich größeren Baugröße der Spule 14 sowie aufgrund der gewünschten Ausrichtung der Spule 14 in der Trageposition des Hörinstruments 2 ist die Spule 14 im Beispiel gemäß Fig. 4 und 5 benachbart zu der Breitseite 44 der Batterie 12 angeordnet. Wie im voranstehenden Beispiel ist die Achse 54 der Spule 14 dabei orthogonal zu der Schichtungsrichtung 28 (mithin parallel zu der Schichtungsebene 32) ausgerichtet. Zudem ist auch hier der Abstand der Anschlusskontakte 50 klein gegen Längserstreckung der Batterie 12 - er entspricht hier etwa einem Fünftel der Längserstreckung der Batterie 12.

Zudem sind auch im Beispiel gemäß Fig. 4 und 5 die beiden Anschlusskontakte 50 parallel zu der Achse 54 der Spule 14 nebeneinander angeordnet. Ebenso ist die Spule 14 wiederum - quer zu ihrer Achse gesehen - zentriert mit der Kontaktanordnung 52 positioniert (s. Fig. 5).

In der bestimmungsgemäßen Trageposition des Hörinstruments 2 ist die zu der Schichtungsrichtung 28 der Batterie 12 orthogonale Achse 54 des Spule 14 exakt oder zumindest näherungsweise senkrecht im Raum, und somit auf den Erdboden hin ausgerichtet. Somit wird ein effektiver Empfang von magnetischen Wechselsignalen ermöglicht, die von - üblicherweise in Böden verlegten - Induktionsschleifen emittiert werden.

Die Erfindung wird anhand der vorstehend beschriebenen Ausführungsbeispiele besonders deutlich. Sie ist gleichwohl auf diese Ausführungsbeispiele aber nicht beschränkt. Vielmehr können innerhalb des von den Ansprüchen definierten weitere Ausführungsformen der Erfindung aus der Ansprüchen und der Beschreibung abgeleitet werden.

### Bezugszeichenliste

- 2: Hörinstrument
- 4: Gehäuse
- 6: Eingangswandler
- 8: Signalverarbeitungseinheit
- 10: Ausgangswandler
- 12: Batterie
- 14: Spule
- 16: Elektronikrahmen
- 18: Aussparung
- 20: Schallkanal
- 22: Spitze
- 24: Schichtstapel
- 26: Schicht
- 28: Schichtungsrichtung
- 30: Grenzfläche
- 32: Schichtungsebene
- 34: Längsrichtung
- 36: Querrichtung
- 38: Stirnseite
- 40: Stirnseite
- 42: Breitseite
- 44: Breitseite
- 46: Schmalseite
- 48: Schmalseite
- 50: Anschlusskontakt
- 52: Kontaktanordnung
- 54: Achse
- 56: Verbindungslinie
- 58: Zentrum
- 60: Symmetrieebene
- 62: Stirnseite
- 64: Stirnseite
- 66: Umfangswand

## Patentansprüche

1. Hörinstrument (2) mit einer aufladbaren Batterie (12) und einer induktiven Sende- und/oder Empfangsspule (14), wobei die Batterie (12) als Schichtstapel (24) ausgebildet ist und zwei Ansschlusskontakte (50) umfasst, **dadurch gekennzeichnet,**
- **dass** die Sende- und/oder Empfangsspule (14) derart angeordnet ist, dass ihre Achse (54) senkrecht zu einer Schichtungsrichtung (28) der Batterie (12) ausgerichtet ist,
- **dass** die Batterie (12) quaderförmig ausgebildet ist und zwei in Schichtungsrichtung (28) einander gegenüberliegenden, polygonalen Stirnseiten (38, 40, 62, 64) und hierzu senkrechte Seitenwände (42, 44, 46, 48, 66) aufweist,
- **dass** die Seitenwände zwei einander gegenüberliegenden Breitseiten (42, 44) und zwei einander gegenüberliegenden Schmalseiten (46, 48) aufweisen, und
- **dass** die Sende- und/oder Empfangsspule (14) benachbart zu einer Seitenwand (48, 66) der Batterie (12) angeordnet ist, und wobei jeder der beiden Anschlusskontakte (50) an dem von der Sende- und/oder Empfangsspule (14) abgewandten Rand einer zugeordneten Stirnseite (38, 62) angeordnet ist.

2. Hörinstrument (2) nach Anspruch 1,
wobei die Batterie (12) in einem Gehäuse (4) des Hörinstruments (2) derart angeordnet ist, dass die Schichtungsrichtung (28) exakt oder näherungsweise parallel zu der Blickrichtung einer Person ausgerichtet ist, die das Hörinstrument (2) in einer bestimmungsgemäßen Trageposition in oder an einem ihrer Ohren trägt.

3. Hörinstrument (2) nach Anspruch 1 oder 2,
wobei die Batterie (12) eine Kontaktanordnung (52) mit den zwei elektrischen Anschlusskontakten (50) aufweist.

4. Hörinstrument (2) nach Anspruch 3,
wobei die beiden Anschlusskontakte (50) in einem Abstand zu einander angeordnet sind, der höchstens ein Drittel, vorzugsweise höchstens ein Viertel, der Längserstreckung der Batterie (12) beträgt.

5. Hörinstrument (2) nach Anspruch 3 oder 4,
wobei die beiden Anschlusskontakte (50) parallel zu der Achse (54) der Sende- und/oder Empfangsspule (14) nebeneinander angeordnet sind.

6. Hörinstrument (2) nach einem der Ansprüche 3 bis 5,
wobei die Sende- und/oder Empfangsspule (14), quer zu ihrer Achse (54) gesehen, zentriert mit der Kontaktanordnung (52) positioniert ist.

7. Hörinstrument (2) nach einem der Ansprüche 1 bis 6,
wobei die beiden Anschlusskontakte (50) an einer der beiden Stirnseiten (38, 40, 62, 64) angeordnet sind.

8. Hörinstrument (2) nach einem der Ansprüche 1 bis 7,
mit einem hinter dem Ohr einer Person zu tragenden Gehäuse (4), in dem die Batterie (12) und die Sende- und/oder Empfangsspule (14) angeordnet sind.

9. Hörinstrument (2) nach einem der Ansprüche 1 bis 8,
wobei die Batterie (12) eine Li-lonen-Batterie ist.

## Claims

1. Hearing instrument (2) having a rechargeable battery (12) and an inductive transmitting and/or receiving coil (14), wherein the battery (12) is formed as a layer stack (24) and comprises two connection contacts (50),
**characterized**
- **in that** the transmitting and/or receiving coil (14) is arranged in such a way that its axis (54) is oriented perpendicularly to a layering direction (28) of the battery (12),
- **in that** the battery (12) is of cuboid form and has two polygonal end faces (38, 40, 62, 64), which are opposite one another in the layering direction (28), and side walls (42, 44, 46, 48, 66) perpendicular to said end faces,
- **in that** the side walls have two broad sides (42, 44) opposite one another and two narrow sides (46, 48) opposite one another, and
- **in that** the transmitting and/or receiving coil (14) is arranged adjacent to a side wall (48, 66) of the battery (12), and wherein each of the two connection contacts (50) is arranged at the edge of an assigned end face (38, 62), which edge faces away from the transmitting and/or receiving coil (14).

2. Hearing instrument (2) according to Claim 1,
wherein the battery (12) is arranged in a housing (4) of the hearing instrument (2) in such a way that the layering direction (28) is oriented exactly or approximately parallel to the viewing direction of a person who is wearing the hearing instrument (2) in an intended wearing position in or on one of their ears.

3. Hearing instrument (2) according to Claim 1 or 2, wherein the battery (12) has a contact arrangement (52) with the two electric connection contacts (50).

4. Hearing instrument (2) according to Claim 3,
wherein the two connection contacts (50) are arranged at a distance from one another that is at most one third, preferably at most one quarter, of the longitudinal extent of the battery (12).

5. Hearing instrument (2) according to Claim 3 or 4, wherein the two connection contacts (50) are arranged next to one another parallel to the axis (54) of the transmitting and/or receiving coil (14).

6. Hearing instrument (2) according to one of Claims 3 to 5,
wherein the transmitting and/or receiving coil (14) is positioned, when viewed transversely in relation to its axis (54), centred with the contact arrangement (52) .

7. Hearing instrument (2) according to one of Claims 1 to 6,
wherein the two connection contacts (50) are arranged at one of the two end faces (38, 40, 62, 64).

8. Hearing instrument (2) according to one of Claims 1 to 7,
having a housing (4) to be worn behind the ear of a person, in which housing the battery (12) and the transmitting and/or receiving coil (14) are arranged.

9. Hearing instrument (2) according to one of Claims 1 to 8,
wherein the battery (12) is an Li-ion battery.

## Revendications

1. Instrument auditif (2), comprenant une batterie rechargeable (12) et une bobine d'induction émettrice et/ou réceptrice (14), dans lequel la batterie (12) est réalisée sous la forme d'un empilement de couches (24) et comprend deux contacts de connexion (50),
**caractérisé**
- **en ce que** la bobine émettrice et/ou réceptrice (14) est disposée de telle sorte que son axe (54) est aligné perpendiculairement à un sens d'empilement (28) de la batterie (12),
- **en ce que** la batterie (12) est réalisée sous la forme d'un parallélépipède et présente deux faces frontales polygonales (38, 40, 62, 64) opposées l'une à l'autre dans le sens d'empilement (28) et des parois latérales (42, 44, 46, 48, 66) perpendiculaires à celles-ci
- **en ce que** les parois latérales présentent deux grands côtés opposés l'un à l'autre (42, 44) et deux petits côtés opposés l'un à l'autre (46, 48), et
- **en ce que** la bobine émettrice et/ou réceptrice (14) est disposée à côté d'une paroi latérale (48, 66) de la batterie (12), et dans lequel chacun des deux contacts de connexion (50) est disposé sur le bord d'une face frontale (38, 62) associée, détourné de la bobine émettrice et/ou réceptrice (14).

2. Instrument auditif (2) selon la revendication 1, dans lequel la batterie (12) est disposée dans un boîtier (4) de l'instrument auditif (2) de telle sorte que le sens d'empilement (28) est alignée exactement ou approximativement en parallèle à la direction du regard d'une personne qui porte l'instrument auditif (2) dans une position de port correcte dans ou sur l'une de ses oreilles.

3. Instrument auditif (2) selon la revendication 1 ou 2, dans lequel la batterie (12) présente un agencement de contacts (52) pourvu des deux contacts de connexion électriques (50).

4. Instrument auditif (2) selon la revendication 3, dans lequel les deux contacts de connexion (50) sont disposés à une distance l'un par rapport à l'autre qui mesure au maximum un tiers, de préférence au maximum un quart, de l'extension longitudinale de la batterie (12) .

5. Instrument auditif (2) selon la revendication 3 ou 4, dans lequel les deux contacts de connexion (50) sont disposés l'un à côté de l'autre en parallèle à l'axe (54) de la bobine émettrice et/ou réceptrice (14).

6. Instrument auditif (2) selon l'une quelconque des revendications 3 à 5, dans lequel la bobine émettrice et/ou réceptrice (14) est positionnée de manière centrée par rapport à l'agencement de contacts (52), vue transversalement à son axe (54).

7. Instrument auditif (2) selon l'une quelconque des revendications 1 à 6, dans lequel les deux contacts de connexion (50) sont disposés sur l'une des deux faces frontales (38, 40, 62, 64).

8. Instrument auditif (2) selon l'une quelconque des revendications 1 à 7, comprenant un boîtier (4) à porter derrière l'oreille d'une personne et dans lequel sont disposées la batterie (12) et la bobine émettrice et/ou réceptrice (14).

9. Instrument auditif (2) selon l'une quelconque des revendications 1 à 8, dans lequel la batterie (12) est une batterie Li-ion.
